# EUROPÄISCHE PATENTSCHRIFT

(11) **EP 2 939 856 B1**
(45) Veröffentlichungstag und Bekanntmachung des Hinweises auf die Patenterteilung: **06.02.2019**
(21) Anmeldenummer: 15163294.0
(22) Anmeldetag: 10.04.2015
(51) Int. Cl.: B60D 1/04, B60D 1/06, B60D 1/46

(54) **PICK-UP HITCH MIT DIREKTER KRAFTEINLEITUNG**
PICKUP HITCH WITH DIRECT FORCE INTRODUCTION
ATTELAGE AVEC DISPOSITIF DE LEVAGE À INTRODUCTION DIRECTE DE FORCE

(30) Priorität: 25.04.2014 DE 102014207788
(43) Veröffentlichungstag der Anmeldung: 04.11.2015
(73) Patentinhaber: Rockinger Agriculture GmbH, 99880 Waltershausen (DE)
(72) Erfinder: Schack, Jörg, 99869 Hochheim (DE)
(74) Vertreter: Ruttensperger Lachnit Trossin Gomoll

(56) Entgegenhaltungen:
- EP-A1- 1 810 561
- WO-A1-81/01391
- GB-A- 1 483 588

## Beschreibung

Die vorliegende Anmeldung betrifft eine Anhänger-Kupplungsvorrichtung zur lösbaren Kupplung eines Zugfahrzeugs mit einem Nachlauffahrzeug, um für einen Zugbetrieb einen Zug aus Zugfahrzeug und Nachlauffahrzeug zu bilden, die Anhänger-Kupplungsvorrichtung umfassend:
- ein Befestigungsmittel zur Befestigung der Anhänger-Kupplungsvorrichtung an einem Fahrzeug aus Zugfahrzeug und Nachlauffahrzeug,
- ein Kupplungsmittel zur Herstellung und Trennung eines formschlüssigen Kupplungseingriffs mit einem Gegenkupplungsmittel des jeweils anderen Fahrzeugs aus Zugfahrzeug und Nachlauffahrzeug, wobei bei hergestelltem Kupplungseingriff und bestimmungsgemäßem Zugbetrieb der Anhänger-Kupplungsvorrichtung - bei Betrachtung eines Referenzzugbetriebs in Geradeausfahrt bei ebener horizontaler Fahrbahn - eine Zugkraft längs einer Zugkraftwirkungsrichtung auf das Kupplungsmittel einwirkt,
- eine Verlagerungseinrichtung zur Verlagerung des Kupplungsmittels längs einer Verlagerungsachse, welche mit der Zugkraftwirkungsrichtung einen Winkel einschließt,
wobei die Verlagerungseinrichtung ein relativ zum Befestigungsmittel unbewegliches, mit diesem starr verbundenes befestigungsmittelfestes Gehäusebauteil und ein relativ zum Gehäusebauteil längs der Verlagerungsachse verlagerbares Bewegungsbauteil aufweist, wobei das Kupplungsmittel zur gemeinsamen Verlagerung mit dem Bewegungsbauteil gekoppelt ist, so dass das Kupplungsmittel verlagerbar ist zwischen einer befestigungsmittelferneren Kupplungsbereitschaftsstellung und einer von dieser verschiedenen befestigungsmittelnäheren Kupplungsbetriebsstellung. Ebenso betrifft die vorliegende Anmeldung ein Fahrzeug mit einer derartigen Anhänger-Kupplungsvorrichtung.

Die bezeichneten gattungsgemäßen Anhänger-Kupplungsvorrichtungen sind im einschlägigen Fachgebiet auch als sogenannte "Pick-up-Hitches" bekannt. Sie finden hauptsächlich Anwendung an landwirtschaftlichen Nutzfahrzeugen, aber auch an anderen Nutzfahrzeugen. Eine gattungsgemäße Anhänger-Kupplungsvorrichtung ist beispielsweise bekannt aus der GB 1 483 588 A. Auch die EP 0 136 989 A2 oder die EP 1 810 561 A1 zeigt eine Anhänger-Kupplungsvorrichtung der eingangs genannten Art.

Die genannte Zugkraftwirkungsrichtung können Fachleute anhand der Gestalt des Kupplungsmittels auch im nicht montierten Zustand der Anhänger-Kupplungsvorrichtung ohne Schwierigkeiten ermitteln, etwa anhand der Gestalt und Orientierung eines Formschluss-Eingriffsmittels des Kupplungsmittels, welches beim Kuppeln unmittelbar in Formschlusseingriff mit einem entsprechenden Gegenmittel, etwa einer Zugöse, gelangt.

In der Regel existiert für derartige Kupplungsvorrichtungen ein Zugkraftwirkungsrichtungsbereich, in dem die Zugkraftwirkungsrichtung liegen kann, da sich die Richtung einer auf das Kupplungsmittel einwirkenden Zugkraft im Zugbetrieb bei Abbiegen des Zuges um eine Kurve oder/und beim Überfahren von in Fahrtrichtung konkav oder konvex gekrümmten Fahrbahnoberflächen ändert. Der Einfachheit halber sei für die vorliegende Anmeldung eine Zugkraftwirkungsrichtung bei einem Referenzzugbetrieb angenommen, bei welchem der aus Zugfahrzeug und Nachlauffahrzeug gebildete Zug auf einer ebenen horizontalen Fahrbahnoberfläche geradlinig geradeaus fährt. Bei am Fahrzeug angebrachter Anhänger-Kupplungsvorrichtung ist die Zugkraftwirkungsrichtung im Sinne der vorliegenden Anmeldung parallel zur Rollachse des die Anhänger-Kupplungsvorrichtung tragenden Fahrzeugs.

Selbst wenn, wie oben angedeutet, ein Bereich von möglichen Zugkraftwirkungsrichtungen für eine Anhänger-Kupplungsvorrichtung in Frage kommt, schließt die Verlagerungsachse mit jeder möglichen Zugkraftwirkungsrichtung des Zugkraftwirkungsrichtungsbereichs einen Winkel ein.

In der Regel sind die gattungsgemäßen Anhänger-Kupplungsvorrichtungen ("Pick-up-Hitches") derart an einem Fahrzeug angebracht, dass die Verlagerungsachse parallel zur Fahrzeuggierachse, also bei auf einem horizontalen ebenen Untergrund stehenden Fahrzeug vertikal, verläuft. Das Kupplungsmittel kann dann zur Herstellung oder Trennung eines formschlüssigen Kupplungseingriffs mit einem Gegenkupplungsmittel abgesenkt werden - in der Regel bis auf oder sogar in den Boden hinein, auf dem das Fahrzeug steht -, wobei in dieser dann bevorzugt abgesenkten Kupplungsbereitschaftsstellung ein Formschlusseingriff des Kupplungsmittels mit dem Gegenkupplungseingriffsmittel des jeweils anderen Fahrzeugs vorbereitet oder sogar teilweise hergestellt oder endgültig gelöst werden kann. Ausgehend von dem so vorbereiteten Formschlusseingriff wird das Kupplungsmittel zur Herstellung des Kupplungseingriffs mitsamt dem Gegenkupplungsmittel in die Kupplungsbetriebsstellung angehoben, in welcher der formschlüssige Kupplungseingriff schließlich vollendet und in der Regel durch einen am Gehäusebauteil oder am Befestigungsmittel vorgesehenen befestigungsmittelfesten Niederhalter unverlierbar gesichert ist. Zum Lösen des Kupplungseingriffs wird das Kupplungsmittel in der Regel wieder von der Kupplungsbetriebsstellung in die Kupplungsbereitschaftsstellung verlagert.

Nachteilig an bekannten Anhänger-Kupplungsvorrichtungen ist der häufig belastende Kraftfluss, mittels dem die auf das Kupplungsmittel bestimmungsgemäß einwirkende Zugkraft im Zugbetrieb über das Bewegungsbauteil, das Gehäusebauteil und das Befestigungsmittel in das die Anhänger-Kupplungsvorrichtung tragende Fahrzeug eingeleitet wird. Denn das Gehäusebauteil ist in der Regel unmittelbar mit dem Befestigungsmittel verbunden, am Gehäusebauteil ist relativ zu diesem beweglich das Bewegungsbauteil vorgesehen, und am Bewegungsbauteil ist schließlich das Kupplungsmittel zur gemeinsamen Bewegung mit diesem vorgesehen. Somit wird bei einem herkömmlichen Zugbetrieb der bekannten Pick-up-Hitches die gesamte Kupplungsvorrichtung durch die während des Zugbetriebs einwirkende Zugkraft belastet. Gerade die relativ zueinander beweglichen Bauteile: Bewegungsbauteil und Gehäusebauteil, müssen daher ausreichend dimensioniert werden, um der auf sie einwirkenden Betriebsbelastung ausreichend lange standzuhalten.

Bei manchen Fahrzeugen führt außerdem die Anordnung einer Anhänger-Kupplungsvorrichtung, wie sie hier diskutiert wird, dazu, dass dem Anbringungsort der Anhänger-Kupplungsvorrichtung am Fahrzeug nahegelegene Abschnitte schwieriger als vorher oder nicht mehr erreichbar sind, dass also ihre Zugänglichkeit durch die Anhänger-Kupplungsvorrichtung erschwert oder sogar verhindert zu werden droht.

Aufgabe der vorliegenden Erfindung ist es, die eingangs genannte Anhänger-Kupplungsvorrichtung derart weiterzubilden, dass während des Zugbetriebs auf das Kupplungsmittel einwirkende Zugkräfte die Kupplungsvorrichtung weniger stark belasten, sodass entweder wenigstens einige Bauteile weniger massiv ausgeführt werden können, um die gleiche Standzeit zu erreichen, oder die bereits bekannten Bauteile eine höhere Standzeit erreichen, wobei gleichzeitig die Zugänglichkeit von dem Anbringungsort der Anhänger-Kupplungsvorrichtung am Fahrzeug nahegelegenen Abschnitten verbessert werden soll.

Diese Aufgabe wird erfindungsgemäß gelöst durch eine Anhänger-Kupplungsvorrichtung der eingangs genannten Art, bei welcher das Kupplungsmittel einen Kraftübertragungsabschnitt aufweist, welcher in der Kupplungsbetriebsstellung unmittelbar mit einem Kraftübertragungsgegenabschnitt des Befestigungsmittels kraftübertragend in Anlageeingriff steht oder bringbar ist.

Durch den kraftübertragenden Anlageeingriff zwischen dem Kraftübertragungsabschnitt des Kupplungsmittels und dem Kraftübertragungsgegenabschnitt des Befestigungsmittels ist es während eines Zugbetriebs möglich, eine auf das Kupplungsmittel ausgeübte Zugkraft über den Anlageeingriff unmittelbar vom Kupplungsmittel in das fahrzeugfeste Befestigungsmittel einzuleiten. Der Kraftfluss verläuft dann vom Kupplungsmittel über den kraftübertragenden Anlageeingriff direkt in das Befestigungsmittel, so dass die Bauteile der Verlagerungseinrichtung weniger stark belastet sind als bei den gattungsgemäßen Anhänger-Kupplungsvorrichtungen des Standes der Technik oder sogar überhaupt nicht durch die auftretende Zugkraft belastet sind.

Dabei ist es gemäß einer Ausgestaltung der vorliegenden Erfindung möglich, den Anlageeingriff zwischen Kraftübertragungsabschnitt und Kraftübertragungsgegenabschnitt unmittelbar bei Erreichen der Kupplungsbetriebsstellung des Kupplungsmittels herzustellen, so dass die genannten Abschnitte: Kraftübertragungsabschnitt und Kraftübertragungsgegenabschnitt, immer dann in kraftübertragendem Anlageeingriff stehen, wenn sich das Kupplungsmittel in seiner Kupplungsbetriebsstellung befindet.

Es ist jedoch ebenso möglich, dass sich die genannten Abschnitte: Kraftübertragungsabschnitt und Kraftübertragungsgegenabschnitt, dann, wenn sich das Kupplungsmittel in seiner Kupplungsbetriebsstellung befindet, mit Abstand gegenüberliegen und dieser Abstand erst durch die auf das Kupplungsmittel einwirkende Zugkraft hergestellt wird. Hierzu ist es lediglich erforderlich, dass das Kupplungsmittel oder ein Formschluss-Eingriffsmittel desselben in Zugkraftwirkungsrichtung geringfügig relativ zum Befestigungsmittel beweglich am Bewegungsbauteil aufgenommen ist. Hierdurch kann beispielsweise ohne Zugkrafteinwirkung ein gewisses Spiel zwischen den genannten kraftübertragenden Abschnitten eingehalten werden, was den Kraftaufwand bei der Verstellung des Kupplungsmittels in die Kupplungsbetriebsstellung hinein oder aus dieser heraus verringert, da bei der Verlagerung des Kupplungsmittels zwischen den genannten kraftübertragenden Abschnitten keine Reibung auftritt.

Konstruktiv können der Kraftübertragungsabschnitt und der Kraftübertragungsgegenabschnitt dadurch realisiert sein, dass das Kupplungsmittel eine Formation aus Vorsprung und Ausnehmung als den Kraftübertragungsabschnitt aufweist und das Befestigungsmittel die jeweils andere Formation aus Vorsprung und Ausnehmung als den Kraftübertragungsgegenabschnitt aufweist. Bevorzugt weist das Kupplungsmittel den Vorsprung und das Befestigungsmittel die Ausnehmung auf, da das Befestigungsmittel ausreichend massiv ausgebildet werden kann, um trotz der darin vorgesehenen Ausnehmung eine ausreichende Bauteilfestigkeit zu besitzen. Das Kupplungsmittel ist dagegen häufig bauraummäßig begrenzt, so dass hier die Verwendung eines Vorsprungs als Kraftübertragungsabschnitt vorteilhaft ohne Festigkeitseinbuße und ohne übermäßig zusätzliche Bauraumbeanspruchung realisiert werden kann.

Bei der genannten bevorzugten Realisierung der kraftübertragenden Abschnitte kommen dann eine Begrenzungsfläche des Vorsprungs mit einer Begrenzungsfläche der Ausnehmung zur Kraftübertragung zwischen Kupplungsmittel und Befestigungsmittel in Anlage aneinander.

Um sicherzugehen, dass der Vorsprung des einen Mittels bei Verlagerung des Kupplungsmittels in die Ausnehmung des jeweils anderen Mittels einfahrbar und aus dieser wieder ausfahrbar ist, kann vorzugsweise vorgesehen sein, dass die Ausnehmung von einem Rand eines Bauteils oder Bauteilabschnitts des sie aufweisenden Mittels ausgehend parallel zur Verlagerungsachse verläuft.

Die Ausnehmung kann daher eine längliche Ausnehmung sein, der Einfachheit halber bevorzugt eine geradlinig längliche Ausnehmung.

Das Kupplungsmittel kann als Formschluss-Eingriffsmittel, welches unmittelbar mit einem Gegeneingriffsmittel des Gegenkupplungsmittels in formschlüssigen Kupplungseingriff bringbar und aus diesem entfernbar ist, einen Zughaken oder eine Kupplungskugel aufweisen. Eine einfache aber sichere und höchst effektive Möglichkeit, an einem derartigen Formschluss-Eingriffsmittel einen Vorsprung als Kraftübertragungsabschnitt vorzusehen, besteht darin, dass das Formschluss-Eingriffsmittel von einem Bolzen durchsetzt ist, welcher in Bolzenlängsrichtung zu wenigstens einer Seite über das Formschluss-Eingriffsmittel vorsteht. Somit kann mit dem Bolzen nicht nur die Festlegung des Formschluss-Eingriffsmittels etwa an dem Bewegungsbauteil unterstützt werden, sondern kann gleichzeitig ohne weitere Maßnahme ein Vorsprung als Kraftübertragungsabschnitt vorgesehen werden.

Zur gleichmäßigen Krafteinleitung ohne resultierendes Drehmoment um die Verlagerungsachse an der Anhänger-Kupplungsvorrichtung ist bevorzugt, dass der das Formschluss-Eingriffsmittel durchsetzende Bolzen zu beiden Seiten des Formschluss-Eingriffsmittels über dieses hinaus vorsteht, so dass beide Längsenden des genannten Bolzens zusammen den Kraftübertragungsabschnitt bilden, und zwar jedes Längsende je einen Teil-Kraftübertragungsabschnitt. Somit kann die unmittelbar auf das Formschluss-Eingriffsmittel im Zugbetrieb einwirkende Zugkraft zu beiden Seiten des Formschluss-Eingriffsmittels in das Befestigungsmittel und damit in das Fahrzeug eingeleitet werden. Bevorzugt verläuft die Bolzenlängsrichtung orthogonal zur Zugkraftwirkungsrichtung in dem genannten Referenzzugbetrieb. Zusätzlich oder alternativ verläuft die Bolzenlängsrichtung bevorzugt orthogonal zur Verlagerungsachse, so dass eine möglichst symmetrische Zugkrafteinleitung in das Befestigungsmittel bezüglich der Struktur der Anhänger-Kupplungsvorrichtung erfolgen kann.

Um die oben genannte Funktion einer Festlegung des Formschluss-Eingriffsmittels am Bewegungsbauteil zusätzlich zur Zugkraftübertragung leisten zu können, ist es vorteilhaft, wenn der Bolzen auch das Bewegungsbauteil der Verlagerungseinrichtung durchsetzt. Wiederum gilt hier, dass es ausreichend ist, wenn der Bolzen bezüglich des Bewegungsbauteils zu einer Seite vorsteht, um einen Vorsprung als Kraftübertragungsabschnitt zu bilden. Aus Gründen symmetrischer, möglichst drehmomentfreier Kraftübertragungseinleitung in das Befestigungsmittel ist jedoch bevorzugt, wenn der Bolzen an zwei entgegengesetzten Seiten über das Bewegungsbauteil vorsteht.

Bevorzugt ist bei den hier beschriebenen Anhänger-Kupplungsvorrichtungen das Formschluss-Eingriffsmittel ein Zughaken. Dieser weist in der Regel einen massiven Hakenkörper mit einem von diesem abstehenden Hakenschenkel auf. Der Hakenschenkel ist zum Formschlusseingriff mit einer Gegenkupplungsformation, etwa einer Zugöse, am Gegenkupplungsmittel ausgebildet. Der Hakenkörper ist zur Festlegung des Zughakens am Bewegungsbauteil ausgebildet.

Vorteilhafterweise steht der Zughaken mit seinen beiden Längsenden über das Bewegungsbauteil, mit dem er zur gemeinsamen Bewegung gekoppelt ist, hinaus vor. Dabei steht aus naheliegenden Gründen das den Hakenschenkel aufweisende Längsende des Zughakens auf der dem Befestigungsmittel abgewandten Seite des Bewegungsbauteils vor, da diese Seite im montierten Zustand der Anhänger-Kupplungsvorrichtung von dem sie tragenden Fahrzeug weg- und damit dem an sie anzukuppelnden Fahrzeug zugewandt ist. Durch das Vorstehen des Hakenschenkels wird eine Herstellung eines formschlüssigen Kupplungseingriffs des Kupplungsmittels mit dem Gegenkupplungsmittel erheblich erleichtert.

Mit seinem entgegengesetzten Längsende, dem Hakenkörper-Längsende, steht der Zughaken vorzugsweise über die entgegengesetzte, dem Befestigungsmittel zugewandte Seite des Bewegungsbauteils über das verbleibende Bewegungsbauteil hinaus vor. Aufgrund dieses Überstands des Hakenkörper-Längsendes über das Bewegungsbauteil kann der kraftübertragende Anlageeingriff der kraftübertragenden Abschnitte: Kraftübertragungsabschnitt und Kraftübertragungsgegenabschnitt, einfach und kollisionsfrei an diesem Überstand realisiert werden.

Das Bewegungsbauteil kann einen Verlagerungsabschnitt aufweisen, welcher längs der Verlagerungsachse seine Querschnittsgestalt im Wesentlichen nicht ändert. Das Kupplungsmittel kann in einem vom Verlagerungsabschnitt abweichenden Aufnahmeabschnitt des Bewegungsbauteils aufgenommen sein, so dass dann genauer der Zughaken über den Verlagerungsabschnitt zu den oben genannten Seiten vorsteht. Der Verlagerungsabschnitt kann insbesondere dazu ausgebildet sein, in das Gehäusebauteil einzufahren und aus diesem auszufahren, so dass das Gehäusebauteil und das Bewegungsbauteil eine Art Teleskopierbewegung ausführen.

Das Bewegungsbauteil hat somit zusammen mit dem Kupplungsmittel bevorzugt eine T-Form, wenngleich der das Formschluss-Eingriffsmittel aufnehmende Querschenkel dieser T-Form im fertig montierten Zustand der Anhänger-Kupplungsvorrichtung üblicherweise am unteren Längsende des Bewegungsbauteils angeordnet sein wird.

Das Befestigungsmittel kann einen Gehäusebefestigungsabschnitt aufweisen, an welchem das Gehäusebauteil angebracht ist. Um die Festigkeit der Verbindung von Gehäusebauteil und Gehäusebefestigungsabschnitt nicht zu beeinträchtigen, kann vorteilhafterweise vorgesehen sein, dass das Befestigungsmittel weiter einen vom Gehäusebefestigungsabschnitt in Richtung vom Gehäusebauteil weg abstehenden Abstehabschnitt aufweist, in welchem der Kraftübertragungsgegenabschnitt ausgebildet ist. Somit kann eine festigkeitsmindernde Auswirkung einer Ausbildung des Kraftübertragungsgegenabschnitts am Gehäusebefestigungsabschnitt vermieden werden.

In diesem Abstehabschnitt ist der Kraftübertragungsgegenabschnitt bevorzugt in Form der oben genannten Ausnehmung ausgebildet, in die der bevorzugte Vorsprung am Kupplungsmittel bei Verlagerung des Bewegungsbauteils einfährt und ausfährt.

Der Abstehabschnitt kann als einseitig festgelegte, frei auskragende Zunge ausgebildet sein oder als Steg etwa zwischen dem Gehäusebefestigungsabschnitt und einem Fahrzeugbefestigungsabschnitt des Befestigungsmittels.

Zur Sicherstellung des Anlageeingriffs der kraftübertragenden Abschnitte ist dabei vorgesehen, dass das Kupplungsmittel in seiner Kupplungsbetriebsstellung dem Abstehabschnitt unmittelbar benachbart angeordnet ist.

Dann, wenn wie oben geschildert der den Vorsprung des Kraftübertragungsabschnitts bildende Bolzen zu beiden Seiten des Formschluss-Eingriffsmittels über dieses hinaus vorsteht, ist es höchst vorteilhaft, wenn auch zu beiden Seiten des Kupplungsmittels ein entsprechender Kraftübertragungsgegenabschnitt vorgesehen ist, wenn sich das Kupplungsmittel in der Kupplungsbetriebsstellung befindet. Hierzu kann vorgesehen sein, dass das Befestigungsmittel zwei vom Gehäusebefestigungsabschnitt in Richtung vom Gehäusebauteil weg, vorzugsweise im Wesentlichen parallel, abstehende Abstehabschnitte aufweist, von welchen in jedem jeweils ein Teil des Kraftübertragungsgegenabschnitts ausgebildet ist.

Bevorzugt sind in den jeweils zum Kupplungsmittel in dessen Kupplungsbetriebsstellung hinweisenden Flächen des wenigstens einen Abstehabschnitts Ausnehmungen ausgebildet, in die der Kraftübertragungsabschnitt des Kupplungsmittels bei Verlagerung desselben ein- und ausfahren kann. Bevorzugt ist die Ausnehmung zum Schutz des Anlageeingriffs der kraftübertragenden Abschnitte der Kraftübertragungsgegenabschnitt in dem wenigstens einen Abstehbauteil nutförmig mit Nutgrund, d. h. den Abstehabschnitt nicht durchsetzend, ausgebildet.

Dann, wenn zwei Abstehabschnitte vorgesehen sind, ist bevorzugt vorgesehen, dass das Kupplungsmittel in seiner Kupplungsbetriebsstellung zwischen den zwei Abstehabschnitten jedem Abstehabschnitt unmittelbar benachbart angeordnet ist. Dann dagegen, wenn sich das Kupplungsmittel in der Kupplungsbereitschaftsstellung befindet, ist dieses dem wenigstens einen Abstehabschnitt nicht mehr unmittelbar benachbart, sondern längs der Verlagerungsachse davon entfernt angeordnet.

Die Zugänglichkeit der dem Anbringungsort der Anhänger-Kupplungsvorrichtung am Fahrzeug nahegelgenen Abschnitte kann erfindungsgemäß dadurch verbessert werden, dass das Befestigungsmittel wenigstens zweiteilig ausgebildet ist mit einem unmittelbar am Fahrzeug befestigbaren fahrzeugseitigen Lagerbauteil und mit einem die Verlagerungseinrichtung mit dem Kupplungsmittel tragenden Tragbauteil, wobei das Tragbauteil mit dem Lagerbauteil um eine Klappachse klappbar gekoppelt ist. Vorzugsweise ist das Tragbauteil an dem Lagerbauteil durch eine verstellbare Sicherungseinrichtung wahlweise gegen eine Klappbewegung sicherbar und zur Klappbewegung freigebbar.

Bevorzugt können die dann zungenförmig einseitig auskragenden Abstehabschnitte des Tragbauteils nicht nur zur Herstellung des kraftübertragenden Anlageeingriffs zwischen Kupplungsmittel und Befestigungsmittel, sondern auch der Bildung der klappbaren Verbindung mit dem Lagerbauteil dienen. Hierzu können die Abstehabschnitte in Abstehrichtung länger ausgeführt sein als das Kupplungsmittel, so dass im Längsendbereich der Abstehabschnitte durch einen diese durchsetzenden Bolzen kollisionsfrei eine Klappachse gebildet werden kann. Der Bolzen durchsetzt dabei die genannten tragbauteilseitigen Abstehabschnitte und entsprechend vorzusehende lagerbauteilseitige Aufnahmeabschnitte.

Die genannte Sicherheitseinrichtung kann ebenfalls gebildet sein durch aufeinander zu abstehende Abstehabschnitte von Tragbauteilen und Lagerbauteil, welche durch einen ausziehbaren Bolzen formschlüssig miteinander verbunden oder voneinander entkoppelt sein können. Alternativ kann die Sicherungsvorrichtung durch einen Sicherungshaken und dergleichen gebildet sein. Der Sicherungshaken kann hydraulisch oder pneumatisch verstellbar sein.

Ebenso ist es vorteilhaft, wenn das Kupplungsmittel gegen eine Verlagerung aus seiner Kupplungsbetriebsstellung heraus gesichert werden kann. Hierzu kann vorgesehen sein, dass die Anhänger-Kupplungsvorrichtung eine schaltbare Festlegeeinrichtung aufweist, durch welche das Kupplungsmittel in seiner Kupplungsbetriebsstellung gegen eine Bewegung aus dieser heraus festlegbar ist und welche lösbar ist, um dem Kupplungsmittel in seiner Kupplungsbetriebsstellung eine Bewegung in die Kupplungsbereitschaftsstellung zu gestatten.

Die Relativbewegung des Bewegungsbauteils relativ zum Gehäusebauteil kann durch ein entsprechendes Kraftgerät, wie etwa eine hydraulische oder bevorzugt pneumatische Kolben-Zylinder-Anordnung bewirkt werden, wobei ein Bauteil aus Kolben und Zylinder, bevorzugt der Zylinder, fest am Gehäusebauteil angelenkt oder angebracht ist und das jeweils andere Bauteil, bevorzugt das Längsende einer aus dem Zylinder ausfahrbaren und in diesen einfahrbaren Kolbenstange, am Bewegungsbauteil angelenkt oder angebracht ist.

Da die vorliegende Erfindung ausschließlich realisierbar ist an einem Fahrzeug, betrifft die vorliegende Erfindung ebenso ein Fahrzeug mit einer Anhänger-Kupplungsvorrichtung mit der Maßgabe, dass die Zugkraftwirkungsrichtung parallel zur Fahrzeugrollachse verläuft, wobei die Verlagerungsachse bevorzugt parallel zur Fahrzeuggierachse verläuft und wobei besonders bevorzugt die Kupplungsbereitschaftsstellung tiefer gelegen ist als die Kupplungsbetriebsstellung.

Die vorliegende Erfindung wird nachfolgend anhand der beiliegenden Zeichnungen näher erläutert werden. Es stellt dar:
- Figur 1: eine Seitenansicht einer erfindungsgemäßen Ausführungsform einer Anhänger-Kupplungsvorrichtung der vorliegenden Anmeldung mit dem Kupplungsmittel in der Kupplungsbetriebsstellung,
- Figur 2: eine Ansicht der Anhänger-Kupplungsvorrichtung von Figur 1 von schräg hinten oben,
- Figur 3: die Ansicht der Anhänger-Kupplungsvorrichtung von Figur 2, jedoch mit der Anhänger-Kupplungsvorrichtung in der Kupplungsbetriebsstellung,
- Figur 4a: die Ansicht der Anhänger-Kupplungsvorrichtung von Figur 1, jedoch mit dem Kupplungsmittel in der Kupplungsbetriebsstellung,
- Figur 4b: die Ansicht der Anhänger-Kupplungsvorrichtung von Figur 4a von oben und
- Figur 5: die Ansicht der Anhänger-Kupplungsvorrichtung längs der Schnittebene A-A von Figur 4b.

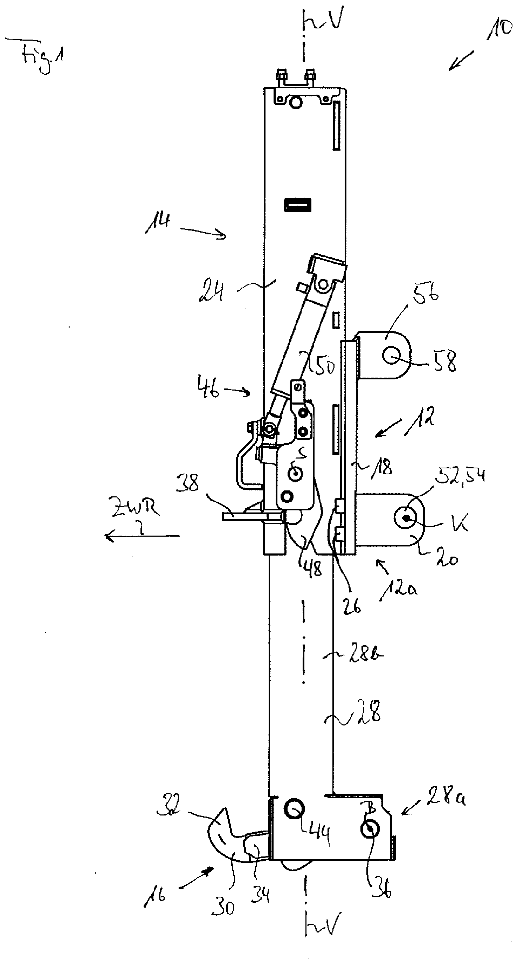

Es wird nachfolgend auf alle Figuren 1 bis 5 Bezug genommen.

In den Figuren ist eine erfindungsgemäße Ausführung einer Anhänger-Kupplungsvorrichtung allgemein mit 10 bezeichnet. Diese umfasst ein Befestigungsmittel 12, eine Verlagerungseinrichtung 14 und ein an der Verlagerungseinrichtung 14 vorgesehenes Kupplungsmittel 16.

Vom Befestigungsmittel 12 ist in den Figuren lediglich ein kupplungsvorrichtungsseitiges Tragbauteil 12a zu sehen, welches mit einem in den Figuren nicht dargestellten fahrzeugseitigen Lagerbauteil das gesamte Befestigungsmittel 12 bildet. Das Tragbauteil 12a kann einen Gehäusebefestigungsabschnitt 18 aufweisen, von welchem zwei parallele Abstehabschnitte 20 und 22 in Richtung zu dem nicht dargestellten Lagerbauteil hin abstehen können. Die Abstehabschnitte 20 und 22 sind in dem dargestellten Ausführungsbeispiel als einseitig von dem Gehäusebefestigungsabschnitt 18 auskragende zungenartige Abstehabschnitte 20 und 22 ausgebildet.

Die Verlagerungseinrichtung 14 umfasst ein Gehäusebauteil 24, welches starr mit dem Gehäusebefestigungsabschnitt 18 und damit mit dem Tragbauteil 12a verbunden ist, beispielsweise durch Schrauben 26. In Figur 1 sind lediglich beispielhaft zwei Schrauben 26 dargestellt. Je nach Festigkeitsanforderung an die Verbindung zwischen Gehäusebauteil 24 und Gehäusebefestigungsabschnitt 18 können auch mehr Schrauben verwendet werden.

An dem Gehäusebauteil 24 ist relativ zu diesem längs einer Verlagerungsachse V verlagerbar ein Bewegungsbauteil 28 vorgesehen. Dabei kann das Gehäusebauteil 24 das Bewegungsbauteil 28, insbesondere dessen Verlagerungsabschnitt 28b, außen umgebend ausgeführt sein, so dass das Bewegungsbauteil 28, wie im dargestellten Ausführungsbeispiel, mit seinem Verlagerungsabschnitt 28b in das Gehäusebauteil 24 einfahrbar und aus diesem ausfahrbar ist.

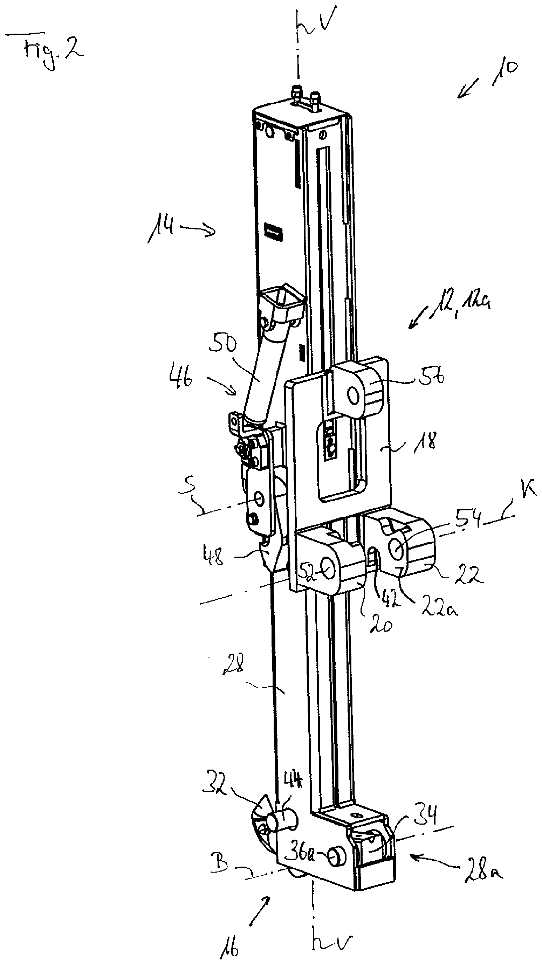

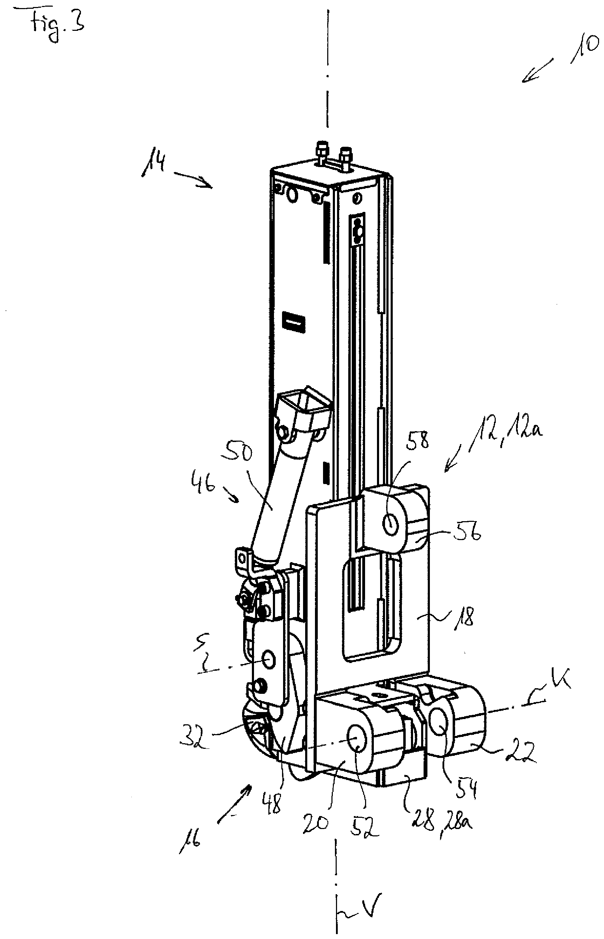

In den Figuren 1 und 2 ist das Bewegungsbauteil 28 in seiner maximal aus dem Gehäusebauteil 24 ausgefahrenen Stellung gezeigt. In den Figuren 3 bis 5 ist dagegen das Bewegungsbauteil 28 in seiner maximal in das Gehäusebauteil 24 eingefahrenen Stellung dargestellt.

An dem freien Längsende 28a des Bewegungsbauteils 28 ist das Kupplungsmittel 16 vorgesehen. Es ist gemeinsam mit dem Bewegungsbauteil 28 relativ zum Gehäusebauteil 24 längs der Verlagerungsachse V verlagerbar. In den Figuren 1 und 2 befindet sich das Kupplungsmittel 16 in der Kupplungsbereitschaftsstellung, in welcher ein in den Figuren nicht dargestelltes Gegenkupplungsmittel, etwa eine Zugöse, zum Kuppeln eines Nachlauffahrzeugs mit einem die Anhänger-Kupplungsvorrichtung 10 üblicherweise tragenden Zugfahrzeug in formschlüssigen Kupplungseingriff bringbar oder aus diesem lösbar ist.

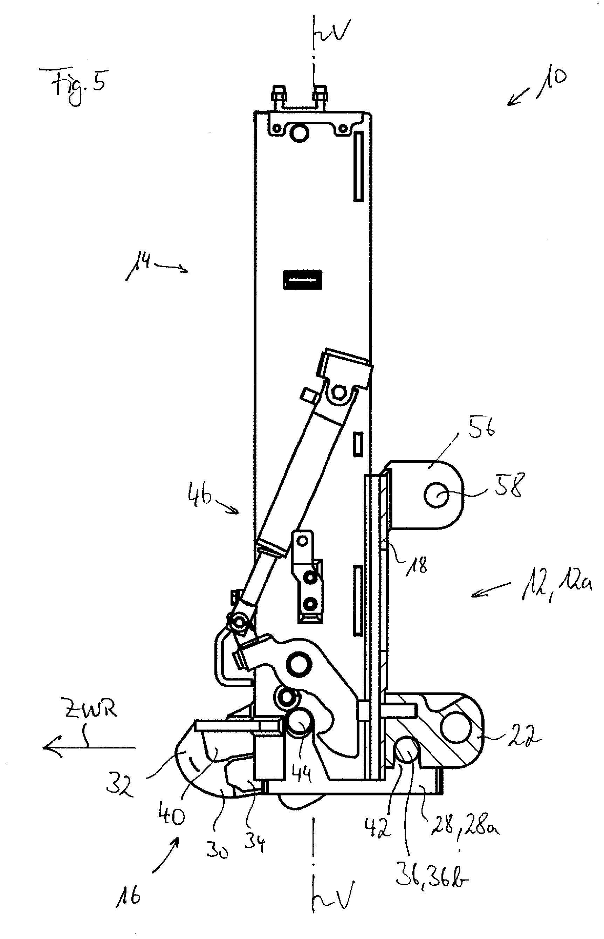

In dem gewählten Beispiel umfasst das Kupplungsmittel 16 einen Zughaken 30 als Formschluss-Eingriffsmittel mit einem Hakenschenkel 32 und mit einem Hakenkörper 34. Das Kupplungsmittel 16 umfasst weiter einen zugkraftübertragenden Befestigungsbolzen 36, welcher mit seinen beiden Längsenden (das Längsende 36a ist in Figur 2 zu sehen, das Längsende 36b in Figur 5) den Hakenkörper 34 und den den Hakenkörper 34 aufnehmenden Abschnitt 28a des Bewegungsbauteils 28 durchsetzt und zu beiden Seiten des Bewegungsbauteils 28 in etwa gleichem Maße über dieses hinaus vorsteht.

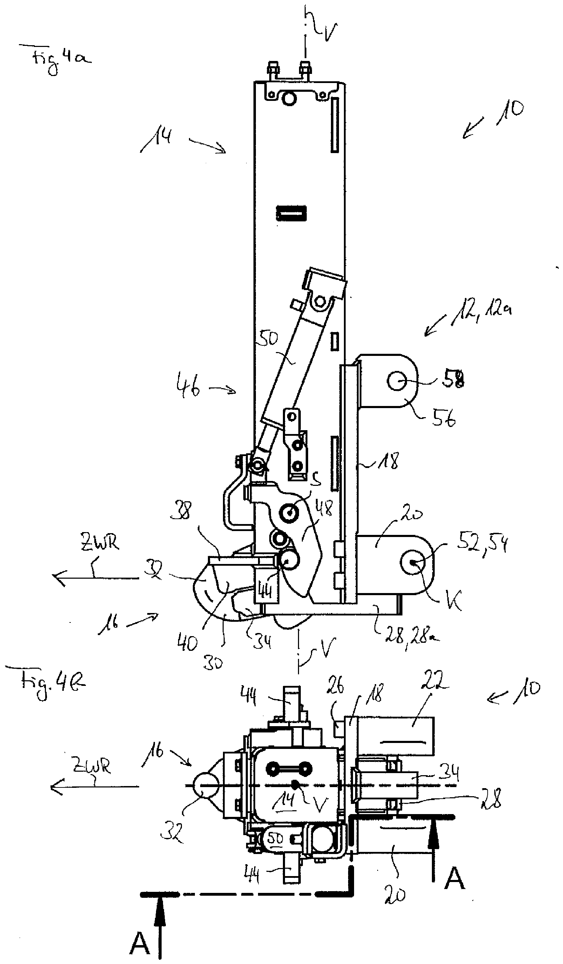

Am Gehäusebauteil 14 kann ein Niederhalter 38 vorgesehen sein, mit welchem der Zughaken 30, d. h. der Hakenschenkel 32 und ein hakenschenkelnaher Abschnitt des Hakenkörpers 34, dann, wenn sich das Kupplungsmittel 16 in der Kupplungsbetriebsstellung befindet (siehe Figur 4a) ein geschlossenes Auge 40 bildet, in dem ein Abschnitt des Gegenkupplungsmittels bei hergestelltem formschlüssigem Kupplungseingriff unverlierbar aufgenommen ist.

Die Wirkungsrichtung ZWR einer im bestimmungsgemäßen Zugbetrieb auf den Hakenschenkel 32 und damit auf das Kupplungsmittel 16 einwirkenden Zugkraft ist in den Figuren 1, 4a, 4b und 5 dargestellt. Sie beruht auf einer Betrachtung eines Referenzzugbetriebs mit einem Zug, welcher sich auf horizontaler ebener Fahrbahn in Geradeausfahrt befindet. Die Zugkraftwirkungsrichtung ZWR verläuft daher parallel zur Fahrzeugrollachse. Sie schließt im dargestellten Beispiel mit der Verlagerungsachse V einen rechten Winkel ein.

Statt eines Zughakens 30 mit Hakenschenkel 32 kann das Kupplungsmittel 16 auch eine Kupplungskugel umfassen.

Wie in den Figuren 3, 4a, 4b und 5 zu sehen ist, befindet sich das das Kupplungsmittel 16 aufnehmende Längsende 28a des Bewegungsbauteils 28 dann, wenn sich das Kupplungsmittel 16 in seiner Kupplungsbetriebsstellung befindet, zwischen den Abstehabschnitten 20 und 22 des Tragbauteils 12a des Befestigungsmittels 12 und ist jedem der Abstehabschnitte 20 und 22 jeweils unmittelbar benachbart.

Wie insbesondere in den Figuren 2 und 5 zu erkennen ist, weist der Abstehabschnitt 22 auf seiner zum jeweils anderen Abstehabschnitt 20 hin weisenden Seite 22a eine längs der Verlagerungsachse V verlaufende Ausnehmung 42 auf. Die zum Abstehabschnitt 22 hin weisende Seitenfläche des Abstehabschnitts 20 ist bezüglich einer die Verlagerungsachse V und die Zugkraftwirkungsrichtung ZWR enthaltenden Symmetrieebene spiegelsymmetrisch zur entsprechenden Fläche 22a des Abstehabschnitts 22 ausgebildet. Es wird daher nachfolgend nur der Abstehabschnitt 22 näher beschrieben werden, dessen Beschreibung unter der genannten Spiegelsymmetriebedingung auch für den Abstehabschnitt 20 gilt.

Dann, wenn sich das Kupplungsmittel 16 in seiner Kupplungsbetriebsstellung befindet (siehe insbesondere Figur 5), ragt der Befestigungsbolzen 36, genauer dessen zum Abstehabschnitt 22 hin über das Bewegungsbauteil 28 hinaus vorstehendes Längsende 36b, in die Ausnehmung 42 ein, so dass es zu einem Anlageeingriff zwischen der Mantelfläche des Längsendes 36b des Bolzens 36 und der ihm gegenüberliegenden Begrenzungsfläche der Ausnehmung 42 kommt.

Durch diesen Anlageeingriff zwischen dem Bolzen 36 (das in Figur 2 erkennbare entgegengesetzte Längsende 36a ragt in der Kupplungsbetriebsstellung in die entsprechende Ausnehmung des Abstehabschnitts 20) kann auf das Kupplungsmittel 16, genauer auf den Zughaken 30, während eines bestimmungsgemäßen Zugbetriebs ausgeübte Zugkräfte unmittelbar vom Zughaken 30 über den Bolzen 36, die Ausnehmung 42 in die Abstehabschnitte 20 und 22, somit in das Befestigungsmittel 12 und folglich in das die Anhänger-Kupplungsvorrichtung 10 tragende Fahrzeug eingeleitet werden. Die Verlagerungseinrichtung 14 bleibt somit während eines bestimmungsgemäßen Zugbetriebs durch die auf die Anhänger-Kupplungsvorrichtung 10 einwirkenden Zugkräfte im Wesentlichen unbelastet.

Der Bolzen 36 bildet somit einen Kraftübertragungsabschnitt des Kupplungsmittels 16. Die Ausnehmungen in den Abstehabschnitten 20 und 22 (siehe etwa Ausnehmung 42) bilden somit den Kraftübertragungsgegenabschnitt des Befestigungsmittels 12.

Um die Verlagerbarkeit des Bolzens 36 in die Ausnehmung 42 hinein zu ermöglichen, reicht vorzugsweise die Ausnehmung 42 vom unteren Bauteilrand des Abstehabschnitts 22 in Richtung der Verlagerungsachse V in den Abstehabschnitt 22 hinein. Aus Gründen erhöhter Festigkeit sind die Ausnehmungen (siehe Ausnehmung 42) nutartig mit Nutgrund in den Abstehabschnitten 20 und 22 ausgebildet und durchsetzen diese in Dickenrichtung nicht.

Das Kupplungsmittel 16 kann weiter einen Sicherungsbolzen 44 aufweisen, welcher das Bewegungsbauteil 28 zu wenigstens einer Seite hin durchsetzt und über diese hinaus vorsteht, so dass der Sicherungsbolzen 44 in der Kupplungsbetriebsstellung des Kupplungsmittels 16 von einer Festlegeeinrichtung 46 in Formschlusseingriff genommen und dadurch das Kupplungsmittel 16 in der Kupplungsbetriebsstellung gegen eine Verlagerung aus dieser Stellung heraus festgelegt werden kann.

Die Festlegeeinrichtung 46 kann beispielsweise einen den Sicherungsbolzen 44 in Formschlusseingriff nehmenden Sicherungshaken 48 und ein den beispielsweise schwenkbar am Gehäusebauteil 24 angelenkten Sicherungshaken 48 verstellbares Kraftgerät 50, etwa in Form einer Pneumatik-Kolben-Zylinder-Anordnung, umfassen.

Die Schwenkachse S des Sicherungshakens 48 ist orthogonal zur Verlagerungsachse V und zur Zugkraftwirkungsrichtung ZWR. Gleiches gilt für die Bolzenlängsachse B des Bolzens 36. Der Sicherungsbolzen 44 ist bevorzugt dem Befestigungsbolzen 36 parallel angeordnet.

Die Abstehabschnitte 20 und 22 können fluchtende Durchgangslöcher 52 bzw. 54 aufweisen, mit welchen sie mittels eines diese Löcher 52 und 54 durchsetzenden, nicht dargestellten Klappbolzens am Lagerbauteil um eine Klappachse K klappbar angelenkt sein können. Hierzu kann das Lagerbauteil beispielsweise ähnliche Abstehabschnitte aufweisen, die ebenfalls fluchtende Durchgangslöcher zur Aufnahme des Klappbolzens aufweisen. Im vorliegenden Ausführungsbeispiel ist die Klappachse K parallel zur Bolzenlängsachse B des Befestigungsbolzens 36.

Zur Sicherung der Anhänger-Kupplungsvorrichtung 10 gegen ein unerwünschtes Klappen um die Klappachse K kann das Tragbauteil 12a eine Sicherungszunge 56 aufweisen, welche formschlüssig an einer entsprechenden Gegenformation des Lagerbauteils festlegbar ist, etwa indem ein Auge 58 der Sicherungszunge 56 von einem fest am Lagerbauteil des Befestigungsmittels 12 vorgesehenen Stift durchsetzt ist. Der Stift kann entweder manuell oder durch ein ähnliches Kraftgerät wie die Anordnung 50 oder elektromotorisch aus dem Auge 58 zurückgezogen werden, um der Anhänger-Kupplungsvorrichtung 10 eine Klappbewegung zu gestatten. Mit der gestatteten Klappbewegung kann die Zugänglichkeit von unmittelbar hinter der Anhänger-Kupplungsvorrichtung 10 gelegenen Fahrzeugabschnitten verbessert werden. Die Klappbarkeit der Anhänger-Kupplungsvorrichtung 10 kommt jedoch nur dann in Frage, wenn kein Gegenkupplungsmittel am Kupplungsmittel 16 angekuppelt ist.

Aufgrund der vorliegend beschriebenen Konstruktion des formschlüssigen Anlageeingriffs der Längsenden 36a und 36b des Befestigungsbolzens 36 mit entsprechenden Ausnehmungen (siehe Ausnehmung 42) in den Abstehabschnitten 20 und 22 kann ohne Verlust einer sonstigen Funktion der Anhänger-Kupplungsvorrichtung 10 verglichen mit den bereits aus dem Stand der Technik bekannten gleichartigen Pick-up-Hitches die Belastung der Anhänger-Kupplungsvorrichtung 10 während eines bestimmungsgemäßen Zugbetriebs erheblich gemindert werden. Wie bereits oben dargelegt wurde, wird die von der Zugkraft während eines Zugbetriebs auf die Verlagerungseinrichtung 14 ausgeübte Belastung erheblich reduziert, da die vorliegende Konstruktion eine unmittelbare Krafteinleitung einer Zugkraft vom Kupplungsmittel 16 unmittelbar in das Befestigungsmittel 12 gestattet.

## Patentansprüche

1. Anhänger-Kupplungsvorrichtung (10) zur lösbaren Kupplung eines Zugfahrzeugs mit einem Nachlauffahrzeug, um für einen Zugbetrieb einen Zug aus Zugfahrzeug und Nachlauffahrzeug zu bilden, die Anhänger-Kupplungsvorrichtung (10) umfassend:
- ein Befestigungsmittel (12) zur Befestigung der Anhänger-Kupplungsvorrichtung (10) an einem Fahrzeug aus Zugfahrzeug und Nachlauffahrzeug,
- ein Kupplungsmittel (16) zur Herstellung und Trennung eines formschlüssigen Kupplungseingriffs mit einem Gegenkupplungsmittel des jeweils anderen Fahrzeugs aus Zugfahrzeug und Nachlauffahrzeug, wobei bei hergestelltem Kupplungseingriff und bestimmungsgemäßem Zugbetrieb der Anhänger-Kupplungsvorrichtung (10) - bei Betrachtung eines Referenzzugbetriebs in Geradeausfahrt bei ebener horizontaler Fahrbahn - eine Zugkraft längs einer Zugkraftwirkungsrichtung (ZWR) auf das Kupplungsmittel (16) einwirkt,
- eine Verlagerungseinrichtung (14) zur Verlagerung des Kupplungsmittels (16) längs einer Verlagerungsachse (V), welche mit der Zugkraftwirkungsrichtung (ZWR) einen Winkel einschließt,
wobei die Verlagerungseinrichtung (14) ein relativ zum Befestigungsmittel (12) unbewegliches, mit diesem starr verbundenes befestigungsmittelfestes Gehäusebauteil (24) und ein relativ zum Gehäusebauteil (24) längs der Verlagerungsachse (V) verlagerbares Bewegungsbauteil (28) aufweist,
wobei das Kupplungsmittel (16) zur gemeinsamen Verlagerung mit dem Bewegungsbauteil (28) gekoppelt ist, so dass das Kupplungsmittel (16) verlagerbar ist zwischen einer befestigungsmittelferneren Kupplungsbereitschaftsstellung und einer von dieser verschiedenen befestigungsmittelnäheren Kupplungsbetriebsstellung, wobei das Kupplungsmittel (16) einen Kraftübertragungsabschnitt (36a, 36b) aufweist, welcher in der Kupplungsbetriebsstellung unmittelbar mit einem Kraftübertragungsgegenabschnitt (42) des Befestigungsmittels (12) kraftübertragend in Anlageeingriff steht oder bringbar ist,
**dadurch gekennzeichnet, dass** das Befestigungsmittel (12) wenigstens zweiteilig ausgebildet ist mit einem unmittelbar am Fahrzeug befestigbaren fahrzeugseitigen Lagerbauteil und mit einem die Verlagerungseinrichtung (14) mit dem Kupplungsmittel (16) tragenden Tragbauteil (12a), wobei das Tragbauteil (12a) mit dem Lagerbauteil um eine Klappachse (K) klappbar gekoppelt ist.

2. Anhänger-Kupplungsvorrichtung nach Anspruch 1,
**dadurch gekennzeichnet, dass** das Kupplungsmittel (16) eine Formation aus Vorsprung (36a, 36b) und Ausnehmung (42) als den Kraftübertragungsabschnitt (36a, 36b) aufweist und das Befestigungsmittel (12) die jeweils andere Formation aus Vorsprung (36a, 36b) und Ausnehmung (42) als den Kraftübertragungsgegenabschnitt (42) aufweist.

3. Anhänger-Kupplungsvorrichtung nach Anspruch 2,
**dadurch gekennzeichnet, dass** die Ausnehmung (42) von einem Rand eines Bauteils (22) oder Bauteilabschnitts des sie aufweisenden Mittels (12) ausgehend parallel zur Verlagerungsachse (V) verläuft.

4. Anhänger-Kupplungsvorrichtung nach einem der vorhergehenden Ansprüche,
**dadurch gekennzeichnet, dass** das Kupplungsmittel (16) ein Formschluss-Eingriffsmittel (30), etwa einen Zughaken (30) oder eine Kupplungskugel, und einen dieses durchsetzenden Bolzen (36) aufweist, welcher in Bolzenlängsrichtung (B) zu einer Seite, vorzugsweise zu beiden Seiten über das Formschluss-Eingriffsmittel (30) vorsteht, wobei dessen vorstehendes eines Längsende (36a), bevorzugt dessen vorstehende beide Längsenden (36a, 36b), den Kraftübertragungsabschnitt (36a, 36b) bilden.

5. Anhänger-Kupplungsvorrichtung nach Anspruch 4,
**dadurch gekennzeichnet, dass** der Bolzen (36) auch das Bewegungsbauteil (28) der Verlagerungseinrichtung (14) durchsetzt und bezüglich diesem zu einer Seite, vorzugsweise zu zwei Seiten vorsteht.

6. Anhänger-Kupplungsvorrichtung nach einem der Ansprüche 4 oder 5,
**dadurch gekennzeichnet, dass** die Bolzenlängsrichtung (B) orthogonal zur Verlagerungsachse (V) oder/und - bei Betrachtung des Referenzzugbetriebs - orthogonal zur Zugkraftwirkungsrichtung (ZWR) verläuft.

7. Anhänger-Kupplungsvorrichtung nach einem der Ansprüche 4 bis 6,
**dadurch gekennzeichnet, dass** das Formschluss-Eingriffsmittel (30) ein Zughaken (30) ist, welcher einen Hakenkörper (34) mit davon abstehendem Hakenschenkel (32) aufweist, wobei der Hakenschenkel (32) zum Formschlusseingriff mit einer Gegenkupplungsformation am Gegenkupplungsmittel ausgebildet ist und wobei der Hakenkörper (34) zur Festlegung des Zughakens (30) am Bewegungsbauteil (28) ausgebildet ist, wobei der Zughaken (30) mit seinen beiden Längsenden über das Bewegungsbauteil (28) hinaus vorsteht, und zwar bevorzugt mit seinem den Hakenschenkel (32) aufweisenden Längsende auf der dem Befestigungsmittel (12) abgewandten Seite des Bewegungsbauteils (28) und mit seinem entgegengesetzten Hakenkörper-Längsende auf der entgegengesetzten, dem Befestigungsmittel (12) zugewandten Seite des Bewegungsbauteils (28).

8. Anhänger-Kupplungsvorrichtung nach einem der vorhergehenden Ansprüche,
**dadurch gekennzeichnet, dass** das Befestigungsmittel (12) einen Gehäusebefestigungsabschnitt (18) aufweist, an welchen das Gehäusebauteil (24) angebracht ist, und einen vom Gehäusebefestigungsabschnitt (18) in Richtung vom Gehäusebauteil (24) weg abstehenden Abstehabschnitt (20, 22) aufweist, in welchem der Kraftübertragungsgegenabschnitt (42) ausgebildet ist.

9. Anhänger-Kupplungsvorrichtung nach Anspruch 8,
**dadurch gekennzeichnet, dass** das Kupplungsmittel (16) in seiner Kupplungsbetriebsstellung dem Abstehabschnitt (20, 22) unmittelbar benachbart angeordnet ist.

10. Anhänger-Kupplungsvorrichtung nach einem der Ansprüche 8 oder 9,
**dadurch gekennzeichnet, dass** das Befestigungsmittel (12) zwei vom Gehäusebefestigungsabschnitt (18) in Richtung vom Gehäusebauteil (24) weg, vorzugsweise im Wesentlichen parallel, abstehende Abstehabschnitte (20, 22) aufweist, von welchen in jedem jeweils ein Teil des Kraftübertragungsgegenabschnitts (42) ausgebildet ist.

11. Anhänger-Kupplungsvorrichtung nach Anspruch 10,
**dadurch gekennzeichnet, dass** das Kupplungsmittel (16) in seiner Kupplungsbetriebsstellung zwischen den zwei Abstehabschnitten (20, 22) jedem Abstehabschnitt (20, 22) unmittelbar benachbart angeordnet ist.

12. Anhänger-Kupplungsvorrichtung nach einem der vorhergehenden Ansprüche,
**dadurch gekennzeichnet, dass** das Tragbauteil (12a) an dem Lagerbauteil durch eine verstellbare Sicherungseinrichtung wahlweise gegen eine Klappbewegung sicherbar und zur Klappbewegung freigebbar ist.

13. Anhänger-Kupplungsvorrichtung nach einem der vorhergehenden Ansprüche,
**dadurch gekennzeichnet, dass** sie eine schaltbare Festlegeeinrichtung (46) aufweist, durch welche das Kupplungsmittel (16) in seiner Kupplungsbetriebsstellung gegen eine Bewegung aus dieser heraus festlegbar ist und welche lösbar ist, um dem Kupplungsmittel (16) in seiner Kupplungsbetriebsstellung eine Bewegung in die Kupplungsbereitschaftsstellung zu gestatten.

14. Fahrzeug mit einer Anhänger-Kupplungsvorrichtung nach einem der vorhergehenden Ansprüche, mit der Maßgabe, dass die Zugkraftwirkungsrichtung (ZWR) parallel zur Fahrzeugrollachse verläuft, wobei die Verlagerungsachse (V) bevorzugt parallel zur Fahrzeuggierachse verläuft und wobei besonders bevorzugt die Kupplungsbereitschaftsstellung tiefer gelegen ist als die Kupplungsbetriebsstellung.

## Claims

1. A trailer hitch apparatus (10) for releasable hitching of a towing vehicle to a towed vehicle in order to form a combination, made up of towing vehicle and towed vehicle, for towing operation, the trailer apparatus (10) encompassing:
- a fastening means (12) for fastening the trailer hitch apparatus (10) to one vehicle from among the towing vehicle and towed vehicle;
- a hitching means (16) for establishing and severing a positive hitching engagement with a counterpart hitching means of the respective other vehicle from among the towing vehicle and towed vehicle, a towing force acting on the hitching means (16) in a towing force action direction (ZWR) when hitching engagement is established and during towing operation of the trailer hitch apparatus (10) as intended, when reference towing operation driving straight ahead on a flat horizontal roadway is considered;
- a displacement device (14) for displacing the hitching means (16) along a displacement axis (V) that encloses an angle with the towing force action direction (ZWR),
the displacement device (14) comprising a fastening-means-mounted housing component (24), immovable relative to the fastening means (12) and rigidly connected thereto, and a movement component (28) displaceable relative to the housing component (24) along the displacement axis (V),
the hitching means (16) being coupled to the movement component (28) for displacement together, so that the hitching means (16) is displaceable between a hitch readiness position farther from the fastening means and a hitch operating position, different from the latter, closer to the fastening means,
the hitching means (16) comprising a force transfer portion (36a, 36b) that, in the hitch operating position, is in or is conveyable directly into force-transferring abutting engagement with a counterpart force transfer portion (42) of the fastening means (12),
wherein the fastening means (12) is embodied in at least two parts, having a vehicle-side bearing component fastenable directly to the vehicle and having a carrying component (12a) that carries the displacement device (14) having the hitching means (16), the carrying component (12a) being coupled to the bearing component foldably around a folding axis (K).

2. The trailer hitch apparatus according to Claim 1, wherein the hitching means (16) comprises a configuration, from among a projection (36a, 36b) and recess (42), constituting the force transfer portion (36a, 36b); and the fastening means (12) comprises the respective other configuration, from among a projection (36a, 36b) and recess (42), constituting the counterpart force transfer portion (42).

3. The trailer hitch apparatus according to Claim 2, wherein the recess (42) extends, proceeding from an edge of a component (22) or component portion of the means (12) that carries it, parallel to the displacement axis (V).

4. The trailer hitch apparatus according to one of the preceding claims, wherein the hitching means (16) comprises a positive engagement means (30), for example a towing hook (30) or a hitch ball, and a pin (36) passing therethrough which projects in a longitudinal pin direction (B) beyond the positive engagement means (30) on one side, preferably on both sides, the one projecting longitudinal end (36a) thereof, preferably both projecting longitudinal ends (36a, 36b) thereof, constituting the force transfer portion (36a, 36b).

5. The trailer hitch apparatus according to Claim 4, wherein the pin (36) also passes through the movement component (28) of the displacement device (14) and projects with respect thereto on one side, preferably on two sides.

6. The trailer hitch apparatus according to one of Claim 4 or 5, wherein the longitudinal pin direction (B) extends orthogonally to the displacement axis (V) and/or, when reference towing operation is considered, extends orthogonally to the towing force action direction (ZWR).

7. The trailer hitch apparatus according to one of Claims 4 to 6, wherein the positive engagement means (30) is a towing hook (30) that comprises a hook body (34) having a hook limb (32) that protrudes therefrom, the hook limb (32) being embodied for positive engagement with a counterpart hitch configuration on the counterpart hitching means, and the hook body (34) being embodied to retain the towing hook (30) on the movement component (28), the towing hook (30) protruding at both of its longitudinal ends beyond the movement component (28), preferably at its longitudinal end having the hook limb (32) on that side of the movement component (28) which faces away from the fastening means (12), and at its oppositely located hook-body longitudinal end on the oppositely located side, facing toward the fastening means (12), of the movement component (28).

8. The trailer hitch apparatus according to one of the preceding claims, wherein the fastening means (12) comprises a housing fastening portion (18) on which the housing component (24) is mounted; and comprises a protrusion portion (20, 22) which protrudes from the housing fastening portion (18) in a direction away from the housing component (24) and in which the counterpart force transfer portion (42) is embodied.

9. The trailer hitch apparatus according to Claim 8, wherein in its hitch operating position, the hitching means (16) is arranged directly adjacently to the protrusion portion (20, 22).

10. The trailer hitch apparatus according to one of Claim 8 or 9, wherein the fastening means (12) comprises two protrusion portions (20, 22) that protrude, preferably in substantially parallel fashion, from the housing fastening portion (18) in a direction away from the housing component (24), one respective part of the counterpart force transfer portion (42) being embodied in each of said protrusion portions.

11. The trailer hitch apparatus according to Claim 10, wherein in its hitch operating position, the hitching means (16) is arranged between the two protrusion portions (20, 22) directly adjacently to each protrusion portions (20, 22).

12. The trailer hitch apparatus according to one of the preceding claims, wherein by way of an adjustable securing device, the carrying component (12a) is selectably securable on the bearing component against a folding motion, and releasable for the folding motion.

13. The trailer hitch apparatus according to one of the preceding claims, wherein it comprises a switchable retaining device (46) by means of which the hitching means (16) is retainable in its hitch operating position against movement out of that position, and which is releasable in order to permit the hitching means (16), in its hitch operating position, to move into the hitch readiness position.

14. A vehicle having a trailer hitch apparatus according to one of the preceding claims, with the stipulation that the towing force action direction (ZWR) proceeds parallel to the vehicle's roll axis, the displacement axis (V) preferably proceeding parallel to the vehicle's yaw axis, and particularly preferably the hitch readiness position being located lower down than the hitch operating position.

## Revendications

1. Dispositif d'accouplement de remorque (10) pour l'accouplement détachable d'un véhicule tracteur avec un véhicule tracté pour former un train attelé composé du véhicule tracteur et du véhicule tracté pour une opération de véhicules attelés, le dispositif d'accouplement (10) comprenant :
- un moyen de fixation (12) pour fixer le dispositif d'accouplement (10) à un véhicule parmi véhicule tracteur et véhicule tracté,
- un moyen d'accouplement (16) pour assurer et pour séparer un engagement d'accouplement par assemblage de forme avec un contre-moyen d'accouplement de l'autre véhicule respectif parmi véhicule tracteur et véhicule tracté, où dans le cas d'un engagement d'accouplement réalisé et lors d'une opération de véhicules attelés du dispositif d'accouplement (10) - regardant une opération de véhicules attelés de référence lors d'un déplacement en ligne droite sur chaussée plane horizontale - une force de traction agit sur le moyen d'accouplement (16) le long d'uns sens d'action de la force de traction (ZWR),
- un dispositif de déplacement (14) pour déplacer le moyen d'accouplement (16) le long d'un axe de déplacement (V) qui renferme un angle avec le sens d'action de la force de traction (ZWR),
où le dispositif de déplacement (14) comprend un composant de boîtier (24) fixé par des moyens de fixation, immobile par rapport au moyen de fixation (12) et fixé de manière rigide avec celui-ci et un composant de mouvement (28) déplaçable par rapport au composant de boîtier (24) le long de l'axe de déplacement (V),
où le moyen d'accouplement (16) est accouplé au composant de mouvement (28) pour un déplacement commun de sorte que le moyen d'accouplement (16) peut être déplacé entre une position d'attente d'accouplement plus loin du moyen de fixation et une position opératoire d'accouplement différente de cette dernière et plus proche du moyen de fixation,
où le moyen d'accouplement (16) comprend une section de transmission de force (36a, 36b) qui dans la position opératoire d'accouplement est ou peut être mis en engagement d'appui avec une contre-section de transmission de force (42) du moyen de fixation (12) en transmettant une force,
**caractérisé en ce que** le moyen de fixation (12) est formé au moins en deux pièces avec un composant de palier du côté véhicule qui peut être fixé directement au véhicule, et avec un composant de support (12a) supportant le dispositif de déplacement (14) avec le moyen d'accouplement (16), le composant de support (12a) étant accouplé au composant de palier de manière rabattable autour d'un axe de rabattement (K).

2. Dispositif d'accouplement de remorque selon la revendication 1,
**caractérisé en ce que** le moyen d'accouplement (16) comprend une formation parmi saillie (36a, 36b) et encoche (42) en tant que la section de transmission de force (36a, 36b) et **en ce que** le moyen de fixation (12) comprend l'autre formation parmi saillie (36a, 36b) et encoche (42) en tant que la contre-section de transmission de force (42).

3. Dispositif d'accouplement de remorque selon la revendication 2,
**caractérisé en ce que** l'encoche (42) s'étend d'un bord d'un composant (22) ou d'une partie de composant du moyen (12) qui la comprend parallèlement à l'axe de déplacement (V).

4. Dispositif d'accouplement de remorque selon une des revendications précédentes,
**caractérisé en ce que** le moyen d'accouplement (16) comprend un moyen d'engagement par assemblage de forme (30), par exemple un crochet de traction (30) ou une boule d'accouplement et un boulon (36), passant à travers de celui-ci, qui dans le sens de la longueur du boulon (B) fait saillie vers un côté, de préférence vers les deux côtés, au-delà du moyen d'engagement par assemblage de forme (30), où une de ses extrémités longitudinales (36a) en saillie, de préférence ses deux extrémités longitudinales (36a, 36b) en saillie forment la section de transmission de force (36a, 36b).

5. Dispositif d'accouplement de remorque selon la revendication 4,
**caractérisé en ce que** le boulon (36) passe aussi à travers le composant de mouvement (28) du dispositif de déplacement (14) et fait saillie par rapport à celui-ci vers un côté, de préférence vers les deux côtés.

6. Dispositif d'accouplement de remorque selon une des revendications 4 ou 5,
**caractérisé en ce que** le sens longitudinal de boulon (B) est orthogonal à l'axe de déplacement (V) ou/et -regardant l'opération de traction de référence - orthogonal au sens de force de traction (ZWR).

7. Dispositif d'accouplement de remorque selon une des revendications 4 à 6,
**caractérisé en ce que** le moyen d'engagement par assemblage de forme (30) est un crochet de traction (30) comprenant un corps de crochet (34) avec une jambe de crochet (32) en saillie par rapport à celle-ci, la jambe de crochet (32) étant adaptée pour un engagement par assemblage de forme avec une contre-formation d'accouplement au contre-moyen d'accouplement et le corps de crochet (34) étant adapté pour fixer le crochet de traction (30) au composant de mouvement (28), le crochet de traction (30) faisant saillie avec ses deux extrémités longitudinales au-delà du composant de mouvement (28), de préférence avec son extrémité longitudinale comprenant la jambe de crochet (32) sur le côté du composant de déplacement (28) opposé au moyen de fixation (12) et avec son extrémité longitudinale de corps de crochet opposé sur le côté opposé du composant de déplacement (28) face au moyen de fixation (12).

8. Dispositif d'accouplement de remorque selon une des revendications précédentes,
**caractérisé en ce que** le moyen de fixation (12) comprend une section de fixation de boîtier (18) à laquelle le composant de boîtier (24) est fixé et une section de saillie (20, 22) faisant saillie de la section de fixation de boîtier (18) s'éloignant du composant de boîtier (24) où la contre-section de transmission de force (42) est formée.

9. Dispositif d'accouplement de remorque selon la revendication 8,
**caractérisé en ce que** dans sa position opératoire d'accouplement le moyen d'accouplement (16) est arrangé directement adjacent à la section de saillie (20, 22).

10. Dispositif d'accouplement de remorque selon une des revendications 8 ou 9,
**caractérisé en ce que** le moyen de fixation (12) comprend deux sections de saillie (20, 22) faisant saillie de la section de fixation de boîtier (18) s'éloignant du composant de boîtier (24), de préférence essentiellement de manière parallèle, où une partie de la contre-section de transmission de force (42) est formée dans chacune des deux sections.

11. Dispositif d'accouplement de remorque selon la revendication 10,
**caractérisé en ce que** le moyen d'accouplement (16) est dans sa position opératoire d'accouplement entre les deux sections de saillie (20, 22) arrangé directement adjacent à chaque section de saillie (20, 22).

12. Dispositif d'accouplement de remorque selon une des revendications précédentes,
**caractérisé en ce qu'**au composant de palier le composant de support (12a) peut par un dispositif de sécurisation réglable être sécurisé contre un mouvement de rabattement ou être libéré pour un mouvement de rabattement.

13. Dispositif d'accouplement de remorque selon une des revendications précédentes,
**caractérisé en ce qu'il** comprend un dispositif d'attachement réglable (46) par lequel le moyen d'accouplement (16) dans sa position opératoire d'accouplement peut être bloqué contre un mouvement hors de celle-ci est qui est libérable pour permettre au moyen d'accouplement (16) dans sa position opératoire d'accouplement un mouvement dans la position d'attente d'accouplement.

14. Véhicule avec un dispositif d'accouplement de remorque selon une des revendications précédentes, à condition que le sens de force de traction (ZWR) est parallèle à l'axe de roulis du véhicule, l'axe de déplacement (V) étant de préférence parallèle à l'axe de lacet du véhicule et la position d'attente d'accouplement étant de préférence particulière plus basse que la position opératoire d'accouplement.
